Europäisches Patentamt

European Patent Office

Office européen des brevets

(11) Veröffentlichungsnummer: **0 226 937**
**A2**

(12) **EUROPÄISCHE PATENTANMELDUNG**

(21) Anmeldenummer: 86117126.2

(22) Anmeldetag: 10.12.86

(51) Int. Cl.⁴: **B65G 7/12**

(30) Priorität: 18.12.85 DE 8535597 U

(43) Veröffentlichungstag der Anmeldung:
01.07.87 Patentblatt 87/27

(84) Benannte Vertragsstaaten:
AT BE CH DE ES FR GB GR IT LI LU NL SE

(71) Anmelder: **Strauss, Bruno**
**Kopernikusstrasse 2A**
**D-5180 Eschweiler(DE)**

(72) Erfinder: **Strauss, Bruno**
**Kopernikusstrasse 2A**
**D-5180 Eschweiler(DE)**

(74) Vertreter: **Liermann, Manfred**
**Josef-Schregel-Strasse 19**
**D-5160 Düren(DE)**

(54) **Tragbare transporteinrichtung.**

(57) Die Erfindung betrifft eine einfach zu handhabende, tragbare Transporteinrichtung, mit der es möglich ist, kastenförmige Gegenstände, wie z. B. Fernsehgeräte sicher von einer Person tragen zu lassen. Dies wird möglich durch zwei im Abstand zueinander angeordnete seitliche Begrenzungskörper (1), die im unteren Bereich über mindestens zwei, einen Auflagerost bildende Querstreben - (2) und im oberen Bereich über zwei weitere, gleichzeitig eine vordere und hintere Begrenzung bildende, Querstreben (2) miteinander verbunden sind, wobei an der Einrichtung Tragmittel (6,22,9,10,19) angeordnet sind, zum Tragen der Einrichtung durch mindestens eine Person.

Fig.1

EP 0 226 937 A2

## Tragbare Transporteinrichtung

Die Neuerung betrifft eine tragbare Transporteinrichtung zum Transportieren von insbesondere kastenförmigen Gegenständen. Solche Einrichtungen sind z.B. die von Möbelpackern häufig verwendeten Tragriemen ggfls. mit Traghaken. Solche Tragriemen können über die Schulter gelegt werden und es kann im frei hängenden Teil ein - schweres Möbelstück, z.B. ein Schrank, eingehängt und so von zwei Möbelpackern getragen werden. Das Transportieren kleinerer kastenförmiger und schwerer Gegenstände wie z.B. Fernsehgeräte oder entsprechend schwer gepackte kleinere Kartons, ist nur mühsam mit solchen Einrichtungen zu bewirken. Es wird daher in der Regel vorgezogen die genannten Einrichtungen nicht zu benutzen und statt dessen solche Gegenstände beispielsweise von zwei Personen direkt mit den Händen aufzunehmen und zu transportieren. Dies aber ist wegen der in aller Regel fehlenden Griffe ebenfalls sehr mühsam und das Risiko, daß ein solcher zu transportierender Gegenstand den Händen entgleitet, stürzt und dabei zerstört wird ist sehr groß.

Der Neuerung liegt somit die Aufgabe zugrunde eine einfach zu handhabende und das zu transportierende Gut sicher haltende tragbare Einrichtung zu schaffen.

Diese Aufgabe ist neuerungsgemäß gelöst durch zwei im Abstand zueinander angeordnete seitliche Begrenzungskörper, die im unteren Bereich über mindestens zwei einen Auflagerost bildende Querstreben und im oberen Bereich über zwei weitere, gleichzeitig eine vordere und hintere Begrenzung bildende, Querstreben miteinander verbunden sind, wobei an der Einrichtung Tragmittel angeordnet sind. Auf diese Art und Weise wird ein leichter und stabiler Behälter gebildet, der das zu transportierende Gut sicher aufnehmen kann. Die solcherart gestaltete Einrichtung weist zusätzlich Tragmittel auf, mit denen diese Einrichtung getragen werden kann. Das zu transportierende Gut kann nun in den Behälter der Einrichtung eingesetzt und Einrichtung und Transportgut über die Tragmittel sicher und einfach transportiert werden.

Eine ausgestaltende Neuerung sieht vor, daß die Begrenzungskörper als Seitenwände ausgebildet sind. Hierdurch wird ein sicherer seitlicher Halt des zu transportierenden Gutes und eine hohe Stabilität der Einrichtung selbst erreicht.

Nach einer anderen Ausgestaltung der Neuerung ist vorgesehen, daß die Tragmittel an den Seitenwänden angeordnet sind. Dies ist einerseits baulich eine einfache Möglichkeit und führt andererseits dazu, daß die Tragkräfte in die stabilen Seitenwände eingeleitet werden.

Wiederum eine Ausgestaltung der Neuerung sieht vor, daß die Seitenwände viereckig geformt sind. Hierbei sollen die Seitenwände nach einer ergänzenden Ausgestaltung vorzugsweise rechteckig oder quadratisch geformt sein. Diese Form ist einfach herzustellen und ermöglicht einen günstigen kastenartigen Aufbau.

Wiederum eine Ausgestaltung der Neuerung sieht vor, daß die Seitenwände Einhängevorrichtungen für Tragmittel aufweisen. Hierdurch gelingt es, die Tragmittel selbst lösbar zu gestalten, wodurch eine größere Handlichkeit der Einrichtung erreicht wird.

Es ist ebenfalls nach einer Ausgestaltung der Neuerung vorgesehen, daß die Tragmittel an der Außenseite der Seitenwände und parallel zu deren unterer Längsseite verlaufend angeordnet oder anbringbar sind und die Seitenwände in beiden Endbereichen von Griffstücken überragt werden. Durch die Anbringung von außen wird einerseits der Innenbereich nicht gestört und es ist immer die richtige Anordnung und Lage erkennbar. Die die Seitenwände überragenden Griffstücke stellen eine einfache Möglichkeit dar,die Einrichtung saenftenartig zu tragen.

Weiterhin ist nach der Neuerung vorgesehen, daß die Tragmittel über die Stäbe von den Einhängevorrichtungen gehalten sind. Hierdurch ist eine einfache, schnell lösbare Verbindung geschaffen.

Auch ist nach der Neuerung vorgeschlagen, daß Griffstücke und zugeordneter Stab über Klappscharniere miteinander verbunden sind. Hierdurch können die nicht benötigten Griffstücke weggeklappt werden, wodurch wiederum die Handlichkeit der Einrichtung verbessert wird. Ebenfalls ist nach der Neuerung noch vorgeschlagen, daß mindestens einseitig an einer Stirnseite jeder Seitenwand ein Tragriemen und ein die beiden Stirnseiten verbindender Riemen vorgesehen ist. Auf diese Art und Weise kann die Einrichtung auch von einer einzelnen Person getragen werden.

Weiterhin ist nach der Neuerung noch vorgesehen, daß auf den Rändern oder/und der Außenseite der Seitenwände Transportgriffe vorgesehen sind. Diese Transportgriffe erleichtern die Handhabung dann, wenn größere und sperrige Güter von weniger großem Gewicht transportiert werden sollen.

Eine andere Ausgestaltung der Neuerung sieht vor, daß die Querstreben im Bereich ihrer beiden Enden je mindestens einen Einhängeschlitz aufweisen, in entsprechende Öffnungen der Seitenwände eingesetzt und mit den Einhängeschlitzen in die Seitenwand eingehängt sind. Hierdurch wird eine stabile Befestigung aller Teile sowie eine starre Abstrebung der Teile untereinander erreicht. Gleichzeitig gelingt es mit dieser Ausbildung alle Teile lösbar miteinander zu verbinden, so daß bei Bedarf die gesamte Einrichtung in Einzelteile zerlegt, transportiert werden kann.

Ergänzend ist nach der Neuerung noch vorgeschlagen, daß an mindestens einer Seitenwand eine Einrichtung zum Verriegeln mindestens der den Auflagerost bildenden Querstreben vorgesehen ist. Auf diese Art und Weise wird sichergestellt, daß sich die Querstreben nicht anheben und dadurch lösen können. Für eine Demontage muß dann die Verriegelungseinrichtung lediglich gelöst werden, so daß die Querstreben entnommen werden können.

Schließlich ist ergänzend nach der Neuerung noch vorgeschlagen, daß als Einrichtung zum Verriegeln eine Stange vorgesehen ist, die an mindestens einer Seitenwand quer über die Querstreben gelegt und in dieser Lage gehalten wird. Dies ist eine sehr einfache Verriegelungsmöglichkeit, die ebenso schnell wieder entfernbar ist.

Die Neuerung wird nachfolgend anhand eines Ausführungsbeispiels näher beschrieben. Es zeigen in verkleinertem Maßstab die

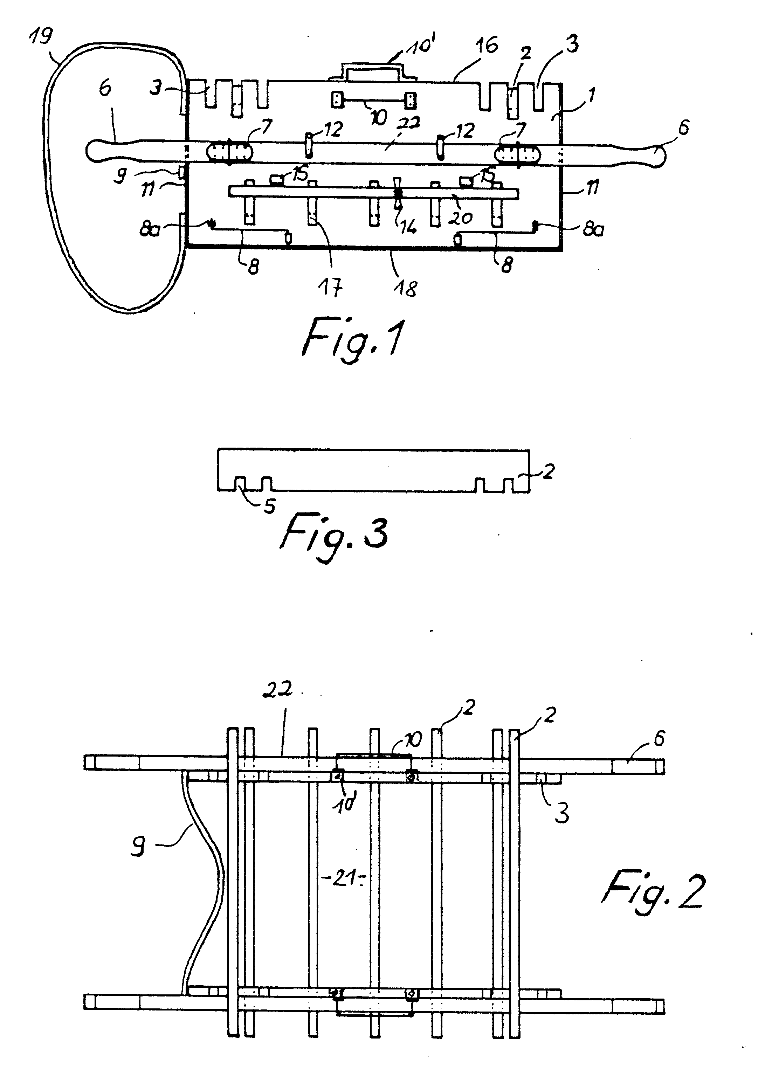

Figur 1 eine Seitenansicht,

Figur 2 eine Draufsicht auf die Transporteinrichtung und

Figur 3 eine Querstrebe in Seitenansicht.

Die Transporteinrichtung besteht im wesentlichen aus zwei rechteckigen Seitenwänden 1, die in gegenseitigem Abstand und parallel zueinander senkrecht auf ihrer unteren Längsseite 18 aufstehen können. Die Seitenwände 1 sind über Querstreben 2 lösbar miteinander verbunden. An ihrer oberen Längsseite im Bereich des Randes 16 haben die Seitenwände 1 schlitzartige Öffnungen 3 und ebensolche schlitzartigen Öffnungen 17 im Abstand von der unteren Längsseite 18. Die oberen Öffnungen 3 sind jeweils in der Nähe der beiden Stirnseiten der rechteckigen Seitenwände 1 eingelassen. Die unteren Öffnungen 17 sind demgegenüber im mittleren Bereich der Seitenwände 1 vorgesehen. Sowohl die Öffnungen 3 wie auch die Öffnungen 17 haben einen rechteckigen Querschnitt und sind in gegenseitigem Abstand zueinander vorgesehen, wobei die gegenseitigen Abstände zwischen den oberen Öffnungen 3 unterschiedlich sind von den gegenseitigen Abständen der unteren Öffnungen 17. Auch sind die unteren Öffnungen 17 in der Regel etwa länger als die oberen Öffnungen 3. Zwischen den Gruppen der oberen Öffnungen 3 erstreckt sich ein Bereich des oberen Randes 16, der keine Öffnungen aufweist.

Zwischen an jeweils gleicher Stelle befindlichen Öffnungen 3 bzw. 17 der beiden Seitenwände 1 sind rechteckige Querstreben 2 vorgesehen, die auf einer ihrer Längsseiten Einhängeschlitze 5 aufweisen. Es ist jeweils eine Gruppe von Einhängeschlitze 5 in der Nähe der Stirnseiten der Querstreben 2 vorgesehen, zwischen denen sich ein Bereich der Längsseite der Querstrebe 2 erstreckt, der keine Schlitze aufweist. Die Einhängeschlitze 5 sind ebenfalls rechteckig und im gegenseitigen Abstand zueinander in die Querstrebe 2 eingeschnitten.

Zur Bildung eines rechteckigen Transportraumes 21 greifen jeweils zwei Querstreben 2 durch die Öffnungen 3 und mindestens 2 weitere Querstreben 2 durch die Öffnungen 17 hindurch. Dabei rasten die Querstreben 2 mit ihren Einhängeschlitzen 5 jeweils im Grund der Öffnungen 3 bzw. 17 in die Seitenwände 1 ein, wodurch die Seitenwände 1 in ihrer gegenseitigen Abstandslage formstabil gesichert sind. Während es ausreicht im Bereich des oberen Randes 16 jeweils nur zwei einander gegenüberliegende Querstreben 2 anzubringen, kann im Bereich der unteren Langseite 18 eine Mehrzahl von Querstreben 2 vorgesehen sein, je nach dem Gewicht des zu transportierenden Gegenstandes. Die oberen Querstreben 2, welche in die Öffnungen 3 einrasten, bilden somit die stirnseitigen Begrenzungen des Transportraumes 21, während die unteren Querstreben des Transportraumes gleichzeitig auch die Auflage für den Gegenstand darstellen, der sich auf der oberen, von Einhängeschlitzen 5 nicht unterbrochenen Längsseite der Querstreben 2 abstützen kann.

Die auf diese Weise zusammengesetzte Transporteinrichtung wird gegen ungewollte Demontage dadurch gesichert, daß auf der Außenseite von wenigstens einer Seitenwand 1 oberhalb der in den unteren Öffnungen 17 eingerasteten Querstreben 2 ein Stab 20 eingebracht wird, der sich gegen Anlagestücke 15 abstützt und mit einer Flügelmutter 14 auf der Seitenwand 1 befestigt ist. Der Stab 20 gewährleistet, daß sich die unteren Querstreben 2 nicht unbeabsichtigt aus den Öffnungen 17 herauslösen können.

Zum Tragen der Transporteinrichtung sind Griffstücke 6 vorgesehen, die sich über jede Stirnseite einer Seitenwand hinaus erstrecken. Die Griffstücke 6 bilden jeweils die äußeren Enden eines durchgehenden Stabes 22, der an zwei Stellen durchschnitten ist und an diesen Stellen von Scharnieren 7 überbrückt wird. Der Stab 22 ist in seiner Mitte über Einhängevorrichtungen 12 auf der Seitenwand 1 gehalten.. Die Scharniere 7 ermöglichen das Umklappen der Griffstücke 6 auf den mittleren Bereich des Stabes 22, wenn der Transportbehälter nicht benutzt wird. Zusätzlich ist noch an jeder Seitenwand 1 mindestens ein Transportgriff 10, 10' vorgesehen, der die Handhabung der Seitenwand 1 erleichtert oder zusätzlich zum Tragen des zusammengesetzten Transportbehälters dient.

Die zusammengesetzte Transporteinrichtung bildet mit ihren von jeder Stirnseite der Seitenwände 1 ausgehenden Griffstücken 6 eine Art Saenfte, die z.B. von zwei Trägern getragen werden kann. Die Transporteinrichtung ist aber auch für die Handhabung durch eine einzelne Person ausgebildet. Zu diesem Zweck ist an wenigstens einer der Stirnseiten der Seitenwand 1 ein Tragriemen 19 vorgesehen, der eine Schlaufe bildet, durch welche der Träger mit seinen Oberarmen hindurchgreifen und den Transportbehälter - schultern kann.

Zusätzlich stehen ihm dabei ggfls. die im Bereich des Riemens 19 ausgeklappten Griffstücke 6 zur Verfügung, während die gegenüberliegenden Griffstücke 6 auf der anderen Stirnseite der Seitenwand 1 zurückgeklappt sein können.

Weiterhin ist ein Riemen vorgesehen, der zwei einander benachbarte Stirnseiten der Seitenwände 1 überbrückt, so daß sich der Transportbehälter über diesen Riemen 9 auf dem Rücken des Trägers abstützen kann. Der Riemen 9 ist nicht straff gespannt und ist ggfls. lösbar mit den Stirnseiten der Seitenwände 1, die er überbrückt, verbunden.

Auf der Außenfläche einer jeden Seitenwand 1 im Bereich der unteren Längsseite 18 sind ausklappbare Stützen 8 vorgesehen. Während des Transportes eines Gegenstandes sind diese Stützen 8 auf die Seitenwand 1 zurückgeklappt. Bei auseinandergenommenem Transportbehälter werden die Stützen 8 ausgeklappt und in die ausgeklappten Stützen 8 werden die heraufgenommenen Querstreben 2 z.B. mit ihren Ausnehmungen 5 eingehängt, so daß sie nicht verloren gehen.

Schließlich ist zum Schutze der Seitenwände 1 ein Stoßband 11 vorgesehen, welches sich durchgehend oder unterbrochen über mindestens eine Stirnseite und vorzugsweise die untere Längsseite 18 der Seitenwand 1 erstreckt. Das Stoßband kann aus Kunststoff oder Metall oder Gummi ausgeführt sein. Es dient besonders zum Schutz der empfindlichen Ecken der Seitenwände 1 beim rauhen Betrieb des Transportierens von schweren Gegenständen.

Liste der verwendeten Bezugszeichen

1 Seitenwand
2 Querstrebe
3 Öffnung
4 unbenutzt
5 Einhängeschlitz
6 Griffstück
7 Scharnier
8 Stütze
8a Stütze
9 Riemen
10 Transportgriffe
10' Transportgriffe
11 Stoßband
12 Einhängevorrichtung
13 unbenutzt
14 Flügelmutter
15 Anlagestück
16 Rand
17 Öffnung
18 untere Längsseite
19 Tragriemen
20 Stab
21 Transportraum
22 Stab

## Ansprüche

1. Tragbare Transporteinrichtung zum Transportieren von insbesondere kastenförmigen Gegenständen, gekennzeichnet durch zwei im Abstand zueinander angeordnete seitliche Begrenzungskörper (1), die im unteren Bereich über mindestens zwei einen Auflagerost bildende Querstreben (2) und im oberen Bereich über zwei weitere, gleichzeitig eine vordere und hintere Begrenzung bildende, Querstreben (2) miteinander verbunden sind, wobei an der Einrichtung Tragmittel (6,22, 9, 10, 19) angeordnet sind zum Tragen der Einrichtung durch mindestens eine Person.

2. Einrichtung nach Anspruch 1, dadurch gekennzeichnet, daß die Begrenzungskörper als Seitenwände (1) ausgebildet sind.

3. Einrichtung mindestens nach Anspruch 2, dadurch gekennzeichnet, daß die Tragmittel - (6,22,9,10,19) an den Seitenwänden (1) angeordnet sind.

4. Einrichtung nach mindestens einem der Ansprüche 1 bis 3, dadurch gekennzeichnet, daß die Seitenwände (1) viereckig geformt sind.

5. Einrichtung mindestens nach Anspruch 4, dadurch gekennzeichnet, daß die Seitenwände rechteckig oder quadratisch geformt sind.

6. Einrichtung nach mindestens einem der Ansprüche 1 bis 5, dadurch gekennzeichnet, daß die Seitenwände (1) Einhängevorrichtungen (12) für die Tragmittel (6,22) aufweisen.

7. Einrichtung nach mindestens einem der Ansprüche 1 bis 6, dadurch gekennzeichnet, daß die Tragmittel (6,22) an der Außenseite der Seitenwände (1) und parallel zu deren unterer Längsseite (18) verlaufend angeordnet oder anbringbar sind und die Seitenwände (1) in beiden Endbereichen von Griffstücken (6) überragt werden.

8. Einrichtung nach mindestens einem der Ansprüche 1 bis 7, dadurch gekennzeichnet, daß die Tragmittel (6,22) über die Stäbe (22) von den Einhängevorrichtungen (12) gehalten sind.

9. Einrichtung nach mindestens einem der Ansprüche 1 bis 8, dadurch gekennzeichnet, daß Griffstücke (6) und zugeordneter Stab (22) über Klappscharniere (7) miteinander verbunden sind.

10. Einrichtung nach mindestens einem der Ansprüche 1 bis 9, dadurch gekennzeichnet, daß mindestens einseitig an einer Stirnseite jeder Seitenwand (1) ein Tragriemen (19) und ein die beiden Stirnseiten verbindender Riemen (9) vorgesehen ist.

11. Einrichtung nach mindestens einem der Ansprüche 1 bis 10, dadurch gekennzeichnet, daß auf den Rändern oder/und der Außenseite der Seitenwände Transportgriffe (10, 10') vorgesehen sind.

12. Einrichtung mindestens nach Anspruch 1, dadurch gekennzeichnet, daß die Querstreben (2) im Bereich ihrer beiden Enden je mindestens einen Einhängeschlitz (5) aufweisen, in entsprechende Öffnungen (3,17) der Seitenwände (1) eingesetzt und mit den Einhängeschlitzen (5) in die Seitenwand eingehängt sind.

13. Einrichtung nach mindestens einem der Ansprüche 1 bis 12, dadurch gekennzeichnet, daß an mindestens einer Seitenwand (1) eine Einrichtung (15,20) zum Verriegeln mindestens der den Auflagerost bildenden Querstreben (2) vorgesehen ist.

14. Einrichtung mindestens nach Anspruch 15, dadurch gekennzeichnet, daß als Einrichtung zum Verriegeln eine Stange (20) vorgesehen ist, die an mindestens einer Seitenwand (1) quer über die Querstreben (2) gelegt und in dieser Lage gehalten wird.

Fig.1

Fig.3

Fig.2